(19)

**Europäisches Patentamt**
**European Patent Office**
**Office européen des brevets**

(11) **EP 4 083 867 B1**

(12) **EUROPEAN PATENT SPECIFICATION**

(45) Date of publication and mention
of the grant of the patent:
**21.01.2026 Bulletin 2026/04**

(21) Application number: **21204207.1**

(22) Date of filing: **22.10.2021**

(51) International Patent Classification (IPC):
**G06N 3/084** (2023.01)   **G06N 3/044** (2023.01)
**G06N 3/045** (2023.01)   **G06N 3/0499** (2023.01)
**G06N 3/0442** (2023.01)   **G08B 17/00** (2006.01)
**G06N 3/09** (2023.01)
**G08B 29/18** (2006.01)

(52) Cooperative Patent Classification (CPC):
**G06N 3/084; G06N 3/044; G06N 3/0442;**
**G06N 3/045; G06N 3/0499; G06N 3/09;**
**G08B 17/00; G08B 29/186; G08B 31/00;**
G08B 29/188

(54) **RECURRENT TREND PREDICTIVE NEURAL NETWORK FOR MULTI-SENSOR FIRE DETECTION**

NEURONALES NETZWERK ZUR VORHERSAGE WIEDERKEHRENDER TRENDS ZUR
FEUERDETEKTION MIT MEHREREN SENSOREN

RÉSEAU DE NEURONES PRÉDICTIF DE TENDANCES RÉCURRENTES POUR DÉTECTION
D'INCENDIE MULTI-CAPTEURS

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **29.04.2021 TR 202107299**

(43) Date of publication of application:
**02.11.2022 Bulletin 2022/44**

(73) Proprietors:
• **Yasar Universitesi**
**35100 Bornova/Izmir (TR)**
• **EDS Elektronik Destek Sanayi ve Ticaret Ltd.Sti**
**34785 Sancaktepe/Istanbul (TR)**
• **Nakip, Mert**
**Seferihisar/Izmir (TR)**

(72) Inventors:
• **NAKIP, MERT**
**IZMIR (TR)**
• **GUZELIS, CUNEYT**
**IZMIR (TR)**
• **YILDIZ, OSMAN**
**34785 ISTANBUL (TR)**

(74) Representative: **Yalçiner Patent and Consulting**
**Ltd.**
**Tunus Caddesi 85/3-4**
**Kavaklidere**
**06680 Ankara (TR)**

(56) References cited:
• **NAKIP MERT ET AL: "Multi-Sensor Fire Detector**
**based on Trend Predictive Neural Network", 2019**
**11TH INTERNATIONAL CONFERENCE ON**
**ELECTRICAL AND ELECTRONICS**
**ENGINEERING (ELECO), CHAMBER OF**
**TURKISH ELECTRICAL ENGINEERS, 28**
**November 2019 (2019-11-28), pages 600 - 604,**
**XP033714698, DOI: 10.23919/**
**ELECO47770.2019.8990400**
• **HYNDMAN R.J. ET AL: "7.2 Trend methods",**
**FORECASTING: PRINCIPLES AND PRACTICE**
**(2ND EDITION), 1 April 2018 (2018-04-01),**
**Melbourne, Australia, XP055912716, Retrieved**
**from the Internet <URL:https://web.archive.org/**
**web/20190407072957/https://otexts.com/fpp2/**
**holt.html> [retrieved on 20220413]**
• **NAKIP MERT ET AL: "Recurrent Trend Predictive**
**Neural Network for Multi-Sensor Fire Detection",**
**IEEE ACCESS, IEEE, USA, vol. 9, 10 June 2021**
**(2021-06-10), pages 84204 - 84216, XP011860430,**
**DOI: 10.1109/ACCESS.2021.3087736**

## Description

### Technical Field

In this invention, the novel apparatus developed is the Recurrent Trend Predictive Neural Network (rTPNN) based Multi-Sensor Fire Detector.

The recurrent architecture of the rTPNN model successfully captures the trends in the time series data of each sensor that minimizes the error for the output of rTPNN; hence, it significantly improves the overall prediction performance of the neural network. This invention demonstrates that trend prediction and sensory data fusion properties of the developed rTPNN make a great impact on the fire detection performance of the detectors in terms of sensitivity, specificity, and fire detection time.

### Prior Art

Nowadays, most fire detectors only detect smoke, although the fire is a process that consists of smoke, flame, several kinds of gasses, temperature and humidity [1]. The current percentage of the smoke detectors to the rest in the market of fire detectors is reported as around 60%, however, it is predicted that this percentage will decrease to 50% in 2025 [2]. That is, the fire detectors other than the smoke detectors will comprise half of the market. The most high-tech fire detectors that exist today use different sensors in a system, together with multiple thresholding or machine learning methods, to correct false positive (alarming even though there is no fire) errors. The methods used do not depend on the temporal changes of the environment variables and the dynamics of the environment variables and give a fire alarm in difficult situations (heavy cigarette or food smoke, etc.).

The most important success measure for the fire detector is to detect fire situations correctly (in other words, achieving a low False Negative Rate (FNR)). Although the smoke detectors are able to achieve acceptably low FNR, the reason for the decreasing percentage of smoke detectors is that they are weak to differentiate the pollination, cigarette smoke, and smoke of cooking from the fire [3]. That is, most smoke detectors give False Positive alarms while detecting such cases. False Positive alarm means that the detector alarms as fire even the situation is neither fire nor related to a fire. According to Duisburg Fire Department, only 84% of the fire alarm calls that are automatically triggered by the fire detectors are real fire situations. In addition, 44% of the False Positive alarms are triggered due to the aerosols, almost 20% of which are dust and water aerosols . The False Positive alarms waste the time and money of the fire departments and decrease the comfort level of the users during the daily usage of detectors. Prior art shows that multi-sensor design with the decision-maker based on machine learning is able to decrease the False Positive Rate (FPR) significantly. However, the performance of such a multi-sensor fire detector needs further improvement in terms of FNR and FPR.

In this invention, the works in the literature fall into two categories as the works that aim to detect fire for the outdoor and that for the indoor. First, in the current literature, there are plenty of works that focus on the fire detection systems for outdoor applications (generally for forest fires). For outdoor fire detection, the first group of works uses image-based techniques. Prior art proposes an algorithm that classifies the fire pixels based on the colors. In addition, Prior art uses Convolutional Neural Network (CNN) for the recognition of the smoke from the satellite image. CNN-based algorithms are also used to detect the fire for the outdoor in [11], especially for the forests in prior art . Furthermore, for the forest fire detection from the images, Prior art use Neural Network (NN)-based algorithms and another prior art proposes Hough Feature Transformation based algorithm. The second group of works uses sensors for outdoor fire detection. Prior art proposes the usage of the frequencies in the bandwidth of the microwaves, namely plasma frequency for the sensor-based detection of the outdoor fire. Multiple prior art document uses the sensor network that is generally comprised of multiple fire detectors located separately. The sensor networks are also used for the outdoor fire detection with the Artificial Intelligence (AI)-based decision systems, which are specifically designed by using NNs, and Deep Learning model. Moreover, Also, multiple studies proposes to combine the sensor networks with camera-based systems in order to detect the outdoor fire accurately. Besides the many differences with individual works in the category of outdoor fire detection systems, the main difference between our work and the works in this category is as follows: These works aim to detect the fire for the outdoor applications whereas the invention is novel design for fire detection system that will be implemented in commonly used fire detectors for the indoor.

The works in the second category focus on fire detection for the indoor applications on which this invention also focuses. In this category, the systems in the prior detects the fire for the indoor by using only images of the considered spaces and couple of studies combines the images with sensor data. In contrast, we use multiple sensors and combine the data from the sensors by means of rTPNN model to detect fire. Using only sensor data instead of images enables the detects smoldering fires. In addition, the sensor-based fire detectors can be used in the environments in which the camera-based systems cannot be used, such as public restrooms.

Furthermore, for the indoor fire detection, the performance of the gas sensor based fire detectors are also examined, further studies also use metal oxide gas sensors, and array of gas sensors. However, it is known that the reading of the gas sensors are highly dependent on the temperature and the humidity of the environment. In addition, prior art also proposes to use multiple-sensor system, where each sensor module is placed at the separated locations. These systems are effective for the localization of fire source but not for the suitable and efficiently usable for the indoor fire detection. Thus, in this invention, we use the combination of multiple sensors, which may be located at the same position and satisfy the necessary information to the rTPNN-based decision-maker.

Another group of works designs and uses the multi-sensor detector in many different ways for indoor fire detection. The multi-sensor fire detector is used with decision-makers based on simple algorithms, fuzzy logic and data fusion. The NN-based models are also implemented for the decision-maker of the multi-sensor fire detector. Whereas all of these works detect fire by using only the reading of the sensor at the current time, this invention considers the trend of each sensor reading over time via the trend prediction in the novel architectural design of the rTPNN.

Hyndman [6] discloses Holt's linear trend method to extended simple exponential smoothing to allow the forecasting of data with a trend.

Nakip et al [4] also proposes to use of rTPNN for multi-sensor fire detection.

Finally, Nakip and Guzelis [5] proposes the usage of trend combined with MLP neural network, where the trend is computed based on exponential smoothing. Another study in the prior art uses the combination of trend with MLP and improves it by computing the trend based on Kendall-$\tau$ trending algorithm. In both of these works, the trend is computed distinctly from the decision-maker (MLP in these works); thus, either the computation of trend does not consider the error in fire decision at all or the tuning of the parameters for the trend computation should be performed additionally to the training of decision-maker. In contrast, invention proposes a novel NN architecture, namely rTPNN, which consists of both the computation of trend and the decision-maker together and designed specifically for fire detection with a multi-sensor detector.

## Aims of the Invention and Brief Description

In order to decrease both FNR (False Negative Rate) and FPR (False Positive Rate), in this invention, the Recurrent Trend Predictive Neural Network (rTPNN) architecture for multi-sensor fire detectors is proposed. rTPNN detects the fire based on multi-sensor readings and the predicted trend and level of that readings. That is, rTPNN constructs a relationship between the decision of fire and the trend of the sensor data as opposed to the conventional approach that takes into account only the current value of the sensor data. With possessing this property, rTPNN is robust to the instant changes of the sensor data, which may be caused by an internal defect of the detector or an external disturbance. The rTPNN model can be used for either the multi-sensor fire detectors or single-sensor detectors. However, rTPNN provides a suitable architecture for multi-sensor fire detectors, which combines the information from different sensors. rTPNN extends the idea of Trend Predictive Neural Network (TPNN) that was firstly proposed by the first two authors of this invention in a conference paper [7]. However, the architecture of rTPNN significantly differs from the architecture of TPNN as follows: 1) rTPNN performs both level prediction and trend prediction while TPNN only performs trend prediction. 2) The recurrent structure of rTPNN enables the learning of all parameters during the training of the model whereas in TPNN the parameters for trend prediction are determined in a trial and error manner. 3) The structure of rTPNN, which learns trend and level prediction, does not perform the extra operations required for TPNN in real-time operation. With these properties, rTPNN is more suitable for real-time applications. The most important success measure for the fire detector is to detect fire situations correctly (in other words, achieving a low False Negative Rate (FNR)). Although the smoke detectors are able to achieve acceptably low FNR, the reason for the decreasing percentage of smoke detectors is that they are weak to differentiate the pollination, cigarette smoke, and smoke of cooking from the fire. That is, most smoke detectors give False Positive alarms while detecting such cases. False Positive alarm means that the detector alarms as fire even the situation is neither fire nor related to a fire. According to Duisburg Fire Department, only 84 % of the fire alarm calls that are automatically triggered by the fire detectors are real fire situations. In addition, 44 % of the False Positive alarms are triggered due to the aerosols, almost 20 % of which are dust and water aerosols. The False Positive alarms waste the time and money of the fire departments and decrease the comfort level of the users during the daily usage of detectors.

In order to decrease both FNR and FPR, in this invention, the Recurrent Trend Predictive Neural Network (rTPNN) architecture for multi-sensor fire detectors is proposed. rTPNN detects the fire based on multi-sensor readings and the predicted trend and level of that readings. That is, rTPNN constructs a relationship between the decision of fire and the trend of the sensor data as opposed to the conventional approach that takes into account only the current value of the sensor data. With possessing this property, rTPNN is robust to the instant changes of the sensor data, which may be caused by an internal defect of the detector or an external disturbance. The rTPNN model can be used for either the multi-sensor fire detectors or single-sensor detectors.

Furthermore, the recurrent internal architecture of the rTPNN model successfully captures the trends in the time series data of each sensor that minimizes the error for the output of rTPNN; hence, it significantly improves the overall prediction performance of the neural network. This invention demonstrates that trend prediction and sensory data fusion properties of the developed rTPNN make a great impact on the fire detection performance of the detectors in terms of sensitivity, specificity, and fire detection time. Note that the rTPNN is a neural network architecture that is suitable and promising for multivariate time series applications beyond multi-sensor fire detection. The proposed fire detection algorithm can be used in all areas where fire detectors are currently used. It can also be used in places where fire detectors do not work successfully (e.g. intense smoke situations).

The performance of the invention of multi-sensor fire detector based on rTPNN for the 9 different real-life fire experiments was evaluated from the publicly available dataset . For these experiments, for the multi-sensor detector, we compare the performance of our rTPNN model with that of each of the Linear Regression (LR), Nonlinear Perceptron (NP), Multi-Layer Perceptron (MLP), Kendall-$\tau$ combined with MLP (Kendall-MLP), Long-Short Term Memory (LSTM), and Support Vector Machine (SVM). We also compare the performance of rTPNN with those of the single-sensor detectors. While the used part of the publicly available dataset contains 25796 samples, it provides meaningful performance evaluation results as well as a fair comparison of the models. Our results show that the rTPNN model outperforms all of the machine learning models while it achieves 1) prediction performance with high generalization ability, 2) low percentages for both FNR and FPR at the same time, and 3) early detection of fire.

**Definition of the Figures of the Invention**

The figures have been used in order to further disclose the developed in this invention, a novel method for is Recurrent Trend Predictive Neural Network for Multi-Sensor Fire Detection by the present invention which the figures have been described below:

Fig. 1: The architecture of the Recurrent Trend Predictive Neural Network (rTPNN)

Fig. 2. The inner architecture of the Trend Predictor unit for sensor i

Fig. 3. The inner architecture of the Level Predictor unit for sensor i

Fig. 4. Comparison of the multi-sensor fire detectors with respect to the F1 Score

Fig. 5. Comparison of the fire detectors with respect to the time passed between the start of the fire and the alarm

Fig. 6. Comparison of the multi-sensor detectors with respect to the training time per epoch for increasing number of sensors

Fig. 7. Execution time comparison of the multi-sensor detectors for increasing number of sensors

**Detailed Description of the Invention**

The novelty of the invention has been described with examples that shall not limit the scope of the invention and which have been intended to only clarify the subject matter of the invention. The present invention has been described in detail below.

I. RECURRENT TREND PREDICTIVE NEURAL NETWORK

In this section, the general architecture, the inputs and the output of the recurrent and end-to-end trainable version of TPNN, namely rTPNN is described. Then, the detailed explanation of the internal architecture of each module in rTPNN is given and learning of the model parameters of rTPNN is explained.

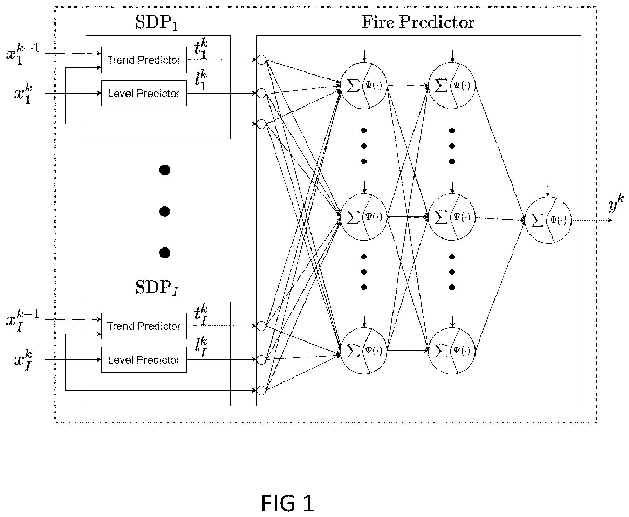

As shown in Fig. 1, the inputs of the rTPNN model are the reading of the sensors at discrete time $k$, $\left\{x_i^k\right\}_{i\in\{1,...,I\}}$ and that at $k$ - 1, $\left\{x_i^{k-1}\right\}_{i\in\{1,...,I\}}$ where $I$ is the total number of sensors in the hardware implementation of fire detector. The output of rTPNN, $y^k$ is the state of the fire. At each discrete time $k$, $y^k$ takes value in the range [0, 1], where $y^k = 0$ advocates that there is no fire and $y^k = 1$ advocates otherwise. In the practical usage of rTPNN, if the value of $y^k$ is greater than a threshold $\alpha$, we state that there is fire. Otherwise, we state that there is no fire.

In the architecture of rTPNN in Fig. 1, there is one Sensor Data Processing (SDP) module for each sensor $i$ of fire detector, which is denoted by SDP$_i$. At each discrete time $k$, for sensor $i$, the SDP$_i$ calculates the predicted trend $t_i^k$ and the predicted level $l_i^k$ of sensor *i*. The outputs of the SDPs are connected to the Fire Predictor (FP) module which predicts $y^k$ and is designed as fully connected layers.

*A. Sensor Data Processing (SDP) Module*

Before we predict the fire state via the FP module in Fig. 1, we first process the reading of each sensor *i* via the SDP$_i$ module. The reason for using an SDP$_i$ module is that we would like SDP$_i$ to learn the relationship between the sensor reading $x^k$ and each of the predicted trend $t^k$ and the predicted level $l^k$. Each module SDP$_i$ consists of the following units: Trend Predictor (TP$_i$) and Level Predictor (LP$_i$). At each discrete time *k,* this module takes $x_i^k$ and $x_i^{k-1}$ as the inputs and returns vector $[t_i^k, l_i^k, x_i^k]$ as the output.

*1) Trend Predictor:* TP$_i$ unit of the SDP$_i$ module calculates the trend of the reading of sensor *i* as

$$t_i^k = \alpha_i^1\left(x_i^k - x_i^{k-1}\right) + \alpha_i^2 t_i^{k-1} \tag{1}$$

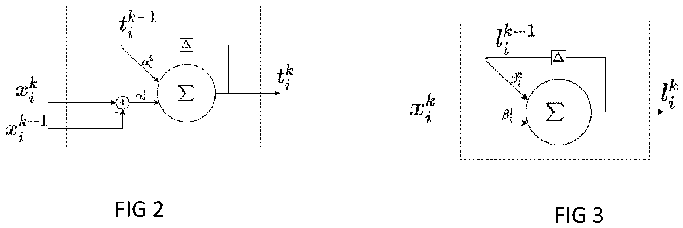

Shortly, in (1), we take the weighted sum of the change in the sensor reading from *k* - 1 to *k* and the previous value of the predicted trend. Although the idea of the trend prediction is based on the Holt-Winters double exponential smoothing, we now learn the prediction of the trend via a recurrent neural network without the condition $\alpha^1 = 1 - \alpha^2$. That is, clearly, (1) states for equation of a linear recurrent neuron, which is shown in Fig. 2.

In Fig. 2, we see that $x_i^k$ and $x_i^{k-1}$ are the inputs and the predicted trend $t_i^k$ is the output of TP$_i$ unit. In this unit, ( $x_i^k - x_i^{k-1}$ ) and the previous state of the predicted trend $t_i^{k-1}$ is fed into the linear neuron with the connection weights $\alpha_i^1$ and $\alpha_i^2$, respectively. The values of these parameters are learned during the training stage of rTPNN.

*2) Level Predictor:* LP$_i$ unit of the SDP$_i$ module predicts the level of the reading of sensor *i* based on the well-known simple exponential smoothing (in other words, Holt Linear), as

$$l_i^k = \beta_i^1 x_i^k + \beta_i^2 l_i^{k-1} \tag{2}$$

Although (2) is the equation of Holt Linear, in our LP$_i$ unit, there is no direct relationship between $\beta_i^1$ and $\beta_i^2$, and it is represented as a linear recurrent neuron. The recurrent neuron of (2) is shown in Fig. 2. As shown in Fig. 2, at discrete time *k*, the only input of LP$_i$ unit is $x_i^k$ and the output is $l_i^k$, where $\beta_i^1$ is the connection weight of $x_i^k$. In addition, the previous state of the predicted level $l_i^{k-1}$ is fed into the linear neuron with connection weight $\beta_i^2$. Since LP$_i$ unit is a recurrent neuron, the parameters $\beta_i^1$ and $\beta_i^2$ are learned during the training of rTPNN.

*B. Fire Predictor (FP) Module*

In Fire Predictor (FP) module of rTPNN in Fig. 1, we use fully connected dense layer, whose inputs are $\{t_i^k, l_i^k, x_i^k\}$ and output is $y^k$ at time *k*. The FP module consists of *H* hidden layers and an output layer. Each hidden layer *h* is comprised of $n_h$ fully connected neurons. In addition, at the output layer of FP module, we use one neuron for the prediction of the fire state.

In Fig. 1, in FP module, each arrow represents a trainable parameter, namely connection weight or bias. We also let $W_h$ denote the matrix of the connection weights for the inputs of hidden layer *h,* and $b_h$ denote the vector of bias parameters of *h.* Thus, at each time k, the forward pass of the FP module is computed as

$$\mathbf{z}_1^k = \Psi\left(\mathbf{W}_1 \begin{bmatrix} t_i^k \\ l_i^k \\ x_i^k \end{bmatrix}\right) + \mathbf{b}_1$$

$$\mathbf{z}_h^k = \Psi(\mathbf{W}_h \mathbf{z}_{h-1}^k) + \mathbf{b}_h \qquad \forall h \in \{2, \dots, H\}$$

$$y^k = \Psi(\mathbf{W}_{H+1} \mathbf{z}_H^k) + \mathbf{b}_{H+1}$$

$y^k = \Psi(\mathbf{W}_{H+1} \mathbf{z}_H^k) + \mathbf{b}_{H+1}$ where $\mathbf{z}_h^k$ is the output of hidden layer $h$. Furthermore, we set the activation function $\Psi(\cdot) = sigmoid(\cdot)$, where $sigmoid(a) = 1/(1 + e^{-a})$. Note that $\Psi(\cdot)$ is an element-wise operator for the vectors or matrices.

*C. Training of rTPNN*

We first let $d^k$ denote the experimentally collected value of the fire state. At each discrete time $k \in [1, T]$, in order to collect $x_i^k$'s and the corresponding $d^k$'s, the fire experiments are performed. At $k$, if there is fire in the experiment, we set $d^k = 1$; otherwise, $d^k = 0$. For the training of rTPNN model, we measure the prediction error of the model via the Mean Squared Error (MSE) as

$$E_{MSE} = \frac{1}{T} \sum_{k=1}^{T} (d^k - y^k)^2 \qquad (3)$$

The parameters in {SDP$_i\}_{i\in\{1,\dots,I\}}$ modules, $\{\gamma_i^1, \gamma_i^2\}_{i\in\{1,\dots,I\}}$, $\{\beta_i^1, \beta_i^2\}_{i\in\{1,\dots,I\}}$, and the connection weights and biases in FP module, $\{\mathbf{W}_h, \mathbf{b}_h\}_{h\in\{1,\dots,H+1\}}$, are learned in training stage of rTPNN to minimize the prediction error $E_{MSE}$.

II. RESULTS

In this section, evaluating of the performance of the rTPNN model and compare that with the performance of each of Linear Regression (LR), Nonlinear Perceptron (NP), Multi-Layer Perceptron (MLP), Kendall-$\tau$ combined with MLP (Kendall-MLP), Long-Short Term Memory (LSTM), and Support Vector Machine (SVM) on fire experiments. To this end, we first review the dataset that is used in this invention.

*A. Fire Dataset*

During the results of this paper, we evaluated the performance of the rTPNN model on the open-access dataset.
This dataset is comprised of 27 data files each of which consists of the relative time to ignition in seconds as well as the sensor readings for an experiment. During these experiments, there are separately located sensors that measure the Temperature, Smoke Obscuration, and the concentrations of Carbon Monoxide, Carbon Dioxide, and Oxygen; however, the sensors that measure all of these metrics are only available in the (or close to the) bedroom in the testbed of data collection. Thus, we use only the experiments that are executed in the bedroom.
Moreover, since in this dataset, three of the experiments (Experiment (Exp)-3, Exp-30, and Exp-32) are aborted due to the failure of ignition, we do not include those in our results. Accordingly, we use 10-fold cross-validation (CV) over the rest of the experiments for the training and test of the fire prediction methods.
Furthermore, in order to simplify the input set of each of the fire detection methods, we normalize each sensory data $x_i^k$ as $x_i^k \leftarrow \dfrac{x_i^k}{\max_k x_i^k}$. Note that while the original value of sensory data is greater than zero, the normalized data is in the range [0,1]. In addition, for each experiment, we assume that the fire starts after 10 seconds (which is only two samples in the dataset) from the ignition time. This assumption shows the expected time for the first triggered alarm but does not prevent fire detectors to detect fire earlier.

1) *10-Fold Cross-Validation (CV):* In order to evaluate the performance of models for the cases that are unseen by the models and the robustness of the models against the selection of the training set, we aim to perform 10-fold cross-validation (CV) on the data of 9 experiments that are mentioned above. To this end, we first create the input-output pairs from the time series data of each experiment, so we obtain 25796 input-output pairs (namely, samples). Next, we shuffle the samples randomly and save them. Finally, we perform CV on the shuffled dataset. Note that in order to achieve a fair comparison between the models, we shuffle the dataset once and use it for all models.

*B. Parameter Tuning for Compared Machine Learning Models*

We now explain the internal architectures, parameter tuning and the implementation details of the machine learning models that we have selected to compare with rTPNN model, which are LR, NP, MLP, Kendall-MLP, LSTM and SVM.

In common, for all of these models, except SVM, we apply thresholding on the output of the model, $y^k$, after the training of the model is completed. To this end, we update $y^k$ as

$$y^k \leftarrow \mathbf{1}(y^k \geq \gamma) \quad (4)$$

In other words, we set $y^k \leftarrow 1$, if $y^k \geq \gamma$ and $y^k \leftarrow 0$, if $y^k < \gamma$, where $\gamma$ denotes the value of threshold. Furthermore, for each of the nonlinear models (rTPNN, NP, MLP, LSTM, TPNN and Kendall-MLP), we exhaustively search for the best value of $\gamma$ between 0 and 1 that maximizes the performance of the model on the training set.

*1) Recurrent Trend Predictive Neural Network (rTPNN): ):* Recall Recall that we need to determine only the number of hidden layers $H$ and the number of neurons $n_h$ at each hidden layer $h \in \{1, ..., H\}$. To this end, we first set $H = 3$ because it is known that the neural network with at least three nonlinear layers is a universal approximator [69]. Then, we set the number of neurons $n_h = I.(H - h)$ at each hidden layer $h \in \{1, ... , H - 1\}$, and $n_h = I/2$ at $h = H$.

*2) Linear Regression (LR):* We select the LR as the simplest benchmark method. Via LR, we simply compute the weighted sum of the sensory inputs at current time $t$. The input of LR is the collection $\{x_i^k\}_{i \in \{1,...,I\}}$, and the output is $y^k$.

*3) Nonlinear Perceptron (NP):* The architecture of the NP model is comprised of a single neuron with a nonlinear activation function, whose input is $\{x_i^k\}_{i \in \{1,...,I\}}$ and output is $y^k$. In addition, we set the activation function of NP to sigmoid function.

*4) Multi-Layer Perceptron (MLP):* We use the MLP model which is comprised of $H$ hidden layers and an output layer with a single neuron (namely, output neuron), where we set $H = 3$. We set the number of neurons $n_h = I. (H - h)$ at each hidden layer $h \in \{1, ..., H - 1\}$, and $n_h = I/2$ at $h = H$. In addition, we set the activation function of each neuron at each layer to *sigmoid* function.

*5) Kendall-$\tau$ combined with MLP (Kendall-MLP):* We selected the Kendall-MLP as one of the fire detection methods that use the trend of the sensor reading. This method which is proposed in [65] computes the trend via Kendall $\tau$ and predicts the fire via MLP based on the sensor readings and trend of those. In this method, we use the MLP which is described above.

*6) Long-Short Term Memory (LSTM):* For the design of the LSTM model, we connect an LSTM layer to the input of the MLP architecture which is explained above. The inputs of the LSTM model are $\{x_i^k\}_{i \in \{1,...,I\}}$ and $\{x_i^{k-1}\}_{i \in \{1,...,n\}}$, and the output of that is $y^k$. In addition, for the LSTM layer, we set the number of LSTM units to the number of sensors, $I$.

*7) Support Vector Machine (SVM):* We selected SVM as the machine learning classifier (where, the rest of the methods are the regression models). We use Radial Basis Function (RBF) as the kernel of SVM. In addition, we selected the value of $C$ parameter from the set $\{0.1, 1, 10\}$ as to maximize the performance of SVM on training set.

*C. Evaluation of Fire Detection Performance*

Comparing of the performance of the rTPNN model with that of each of the LR, NP, MLP, Kendall-MLP, LSTM and SVM as well as the benchmark single-sensor detectors. To this end, using of sensors that measure Temperature, Smoke Obscuration, and Carbon Monoxide, Oxygen and Carbon Dioxide concentrations.

*1) Fire Detection Accuracy:* First, we compare the fire detection methods with respect to the CV performance. In this way, we analyze the generalization ability of the detectors as well as the fire detection ability.

In Table I, presenting of the fire prediction accuracy of each of the detection methods on the training and test sets. In addition, in order to clearly show the ranking of the methods, the rows of this table are ordered with respect to the accuracy of the methods and are grouped into the Machine Learning based Multi-Sensor Detectors and Single-Sensor Detectors with a Threshold.

In this table, see that the rTPNN based multi-sensor detector achieves 96 % accuracy and significantly outperforms all of the other fire detectors. In addition, when we estimate the worst-case performance of the rTPNN model as the summation of the mean with two standard deviations, the worst-case performance is 91.38 % for the test set which is still better than the performance of the other methods.

Furthermore, Table I shows that the multi-sensor fire detectors (especially combined with nonlinear models5) significantly outperform the single-sensor detectors combined with a threshold. Moreover, although the second best performing methods, MLP, Kendall-MLP and LSTM, perform close to each other between 86 % and 90 %, the standard deviation of the LSTM is higher than those of the MLP and Kendall-MLP. That is, the worst-case performance of LSTM significantly underperforms both MLP and Kendall-MLP.

TABLE I

| Comparison Of Fire Detectors With Respect To The Cross-Validation Percentage Accuracy | | | | | |
|---|---|---|---|---|---|
| | | Training | | Test | |
| Fire Detectors | | Mean | Std | Mean | Std |
| Machine Learning based Multi-Sensor Detectors | rTPNN | 96.12 | 2.41 | 95.96 | 2.29 |
| | MLP | 89.63 | 0.21 | 89.58 | 0.67 |
| | Kendall-MLP | 86.67 | 0.09 | 86.61 | 0.84 |
| | LSTM | 86.15 | 5.09 | 86.28 | 4.96 |
| | Nonlinear Perceptron | 84.46 | 0.15 | 84.49 | 1.04 |
| | SVM | 83.78 | 0.11 | 83.77 | 0.99 |
| | Linear Regression | 79.78 | 0.08 | 79.81 | 1.24 |
| Single-Sensor Detectors with a Threshold | Temperature | 78.51 | 0.13 | 78.51 | 1.15 |
| | Carbon Monoxide | 75.73 | 0.12 | 75.73 | 1.10 |
| | Carbon Dioxide | 74.17 | 0.14 | 74.17 | 1.28 |
| | Smoke | 73.55 | 0.13 | 73.55 | 1.19 |
| | Oxygen | 33.39 | 0.14 | 33.39 | 1.28 |

*2) Metrics of Confusion Matrix:* In order to analyze the fire detection performance of the methods in a more detailed way, in Table II, we present the percentage means of True Positive Rate (TPR), False Negative Rate (FNR), True Negative Rate (TNR), and False Positive Rate (FPR) as well as the standard deviations of those. Note that TPR + FNR = 100 and the standard deviation of TPR and that of FNR are equal to each other. Similarly, TNR + FPR = 100 and standard deviation of TNR is equal to that of FPR.

The results in Table II show that there is a significant gap between the percentage TPR of the rTPNN based multi-sensor detector and those of the other multi-sensor detectors, where the value of this gap varies between 17 % and 69 %. Only the Oxygen sensor based detector with a threshold achieves higher TPR than rTPNN. The reason is that this detector triggers a fire alarm for the majority of the samples. Accordingly, FPR of the Oxygen sensor based detector is unacceptably high so the usage of this detector is unpractical. In addition, TPR of all of the detectors except LSTM based and Oxygen sensor based detectors are below 3 % which shows that those models trigger a wrong alarm only for 3 % of the no fire cases. Furthermore, Table II shows that only the rTPNN model is able to achieve high performance (above 92%) for both the TPR and TNR. That is, rTPNN is the only model within the investigated models that predicts both fire and no fire cases with high success.

TABLE II

| Comparison Of Fire Detectors With Respect To Each Of The True Positive Rate, True Negative Rate, False Positive Rate, False Negative Rate | | | | | | | |
|---|---|---|---|---|---|---|---|
| Fire Detectors | | True Positive Rate | False Negative Rate | STD TPR / STD FNR | True Negative Rate | False Positive Rate | STD TNR / STD FPR |
| Machine Learningbased Multi-Sensor Detectors | rTPNN | 92.44 | 7.56 | 2.55 | 97.24 | 2.76 | 2.97 |
| | MLP | 65.42 | 34.58 | 1.34 | 98.29 | 1.71 | 0.52 |
| | Kendall-MLP | 55.13 | 44.87 | 0.60 | 97.96 | 2.04 | 0.22 |
| | LSTM | 74.97 | 25.03 | 15.99 | 90.16 | 9.85 | 11.12 |
| | Nonlinear Perceptron | 41.24 | 58.76 | 0.64 | 99.94 | 0.07 | 0.05 |
| | SVM | 42.63 | 57.37 | 0.22 | 98.51 | 1.49 | 0.04 |
| | Linear Regression | 23.27 | 76.73 | 0.16 | 100 | 0 | 0 |
| Single-Sensor Detectors with a Threshold | Temperature | 18.91 | 81.09 | 0.19 | 100 | 0 | 0 |
| | Carbon Monoxide | 13.61 | 86.39 | 0.15 | 98.12 | 1.88 | 0.04 |
| | Carbon Dioxide | 2.50 | 97.50 | 0.09 | 100 | 0 | 0 |
| | Smoke | 0.18 | 99.82 | 0.02 | 100 | 0 | 0 |
| | Oxygen | 97.00 | 3.00 | 0.10 | 10.46 | 89.54 | 0.09 |

*3) F1 Score*: We now present of the F1 Score of each of the compared multi-sensor methods for the CV experiment for which the results are presented above. In short, the F1 score is the harmonic mean of the sensitivity (namely, TPR percentage) and precision of the alarm decisions of a method; thus, it measures the balance between sensitivity and precision together. The sensitivity conveys how sensitive the method against the fire cases, and the precision conveys how accurate the alarm decisions of the method. Note that the F1 Score takes values in the range [0, 1], where 1 indicates perfect sensitivity and precision, and 0 indicates vice-versa.

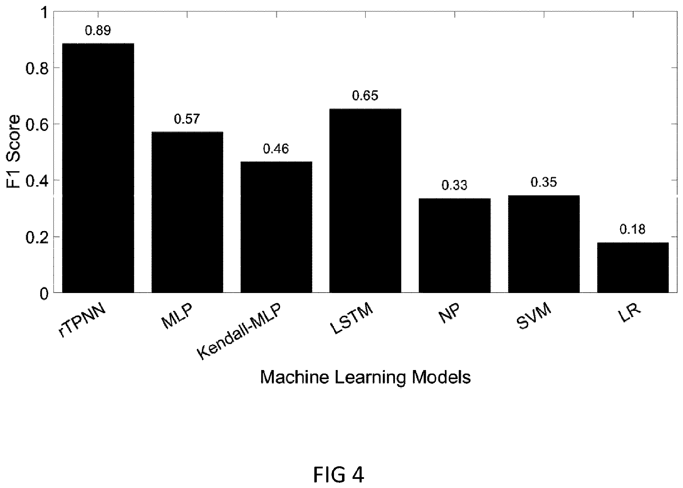

Fig. 4 shows the average F1 Scores for the multi-sensor detectors for CV experiment. In this figure, see that the F1 Score for rTPNN model is 0.89 which is very close to 1 and shows that the rTPNN model is highly successful in terms of both sensitivity and precision. In addition, the F1 Score of rTPNN model is significantly higher than those of the other models, where the difference is between 0.24 and 0.71. Moreover, see that the MLP underperforms to LSTM in terms of F1 Score while the accuracy of MLP is higher than that of LSTM. The reason is that the decisions of LSTM are more balanced between the fire and no fire; however, MLP tends to decide "no fire" more than "fire", which can be seen from TPR and TNR in Table II.

*4) Time to Alarm:* Invention now aim to compare the multi-sensor fire detectors (machine learning models) with respect to the time that is passed until the alarm, namely "time to alarm". To this end, we train and test each method on each fire experiment; then, calculating the average time to alarm over the experiments. Note that in this experiment, invention dos not include the False Positive alarms for which the value of time to alarm is already negative.

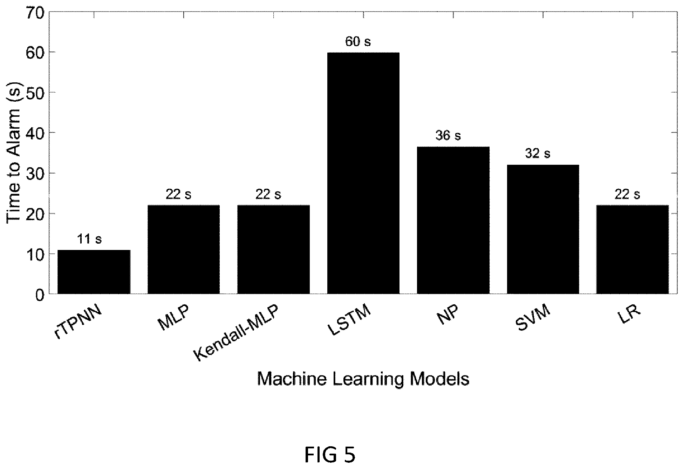

In Fig. 5, the results for an average time to alarm of each model. The results in this figure show that the rTPNN model captures the fire significantly (at least 11 seconds) earlier than those of the other models due to its recurrent trend and level predictor structure. Although all of the models capture the fire in an acceptable time, the LSTM is able to trigger an alarm in 1 minute on average while rTPNN triggers in only 11 seconds. In addition, see that each of the MLP, Kendall-MLP and LR triggers an alarm in 22 seconds while SVM triggers in 32 seconds and NP triggers in 36 seconds.

*D. Computation Time*

Invention now presents the comparison of the multi-sensor fire detectors with respect to each of the training and execution times. To this end, measurement of the training time per epoch and the execution time per prediction on a single experiment 6 for the computation time measurements, we evaluate the performance of the methods on the data file SDC05; however, another file may be used instead of SDC05. The selection of the experiment file will affect only the training time proportional to its number of samples increasing number of sensors. For each number of sensors, I, we select I random sensors from the set of all available sensors. In addition, we performed this experiment on the Google Colab platform with no accelerator.

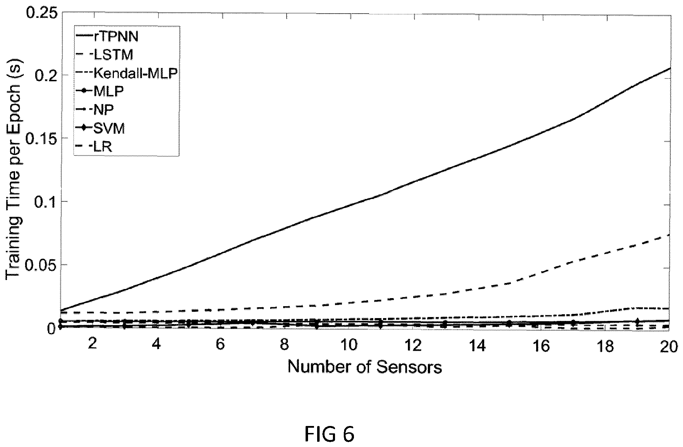

In Fig. 6, invention present the training time per epoch for each fire detection method for the increasing number of sensors. The results in this figure show that the training time of each of the rTPNN, LSTM, Kendall-MLP, MLP increases with the number of sensors while the number of neurons (so the number of parameters) in each method increases with the number of sensors. Furthermore, we see that the training time of rTPNN increases linearly with the number of sensors. The reason is that in the internal architecture of rTPNN (in Fig. 1) for each sensor that is added to the fire detector, an SDP module is added to the neural network. On the other hand, for the fire detectors, the training of the detection method is performed offline, and the number of sensors is practical up to (around) 5 sensors due to the hardware costs; thus, the training time of rTPNN is highly acceptable for the practical implementation while its performance is superior to other methods.

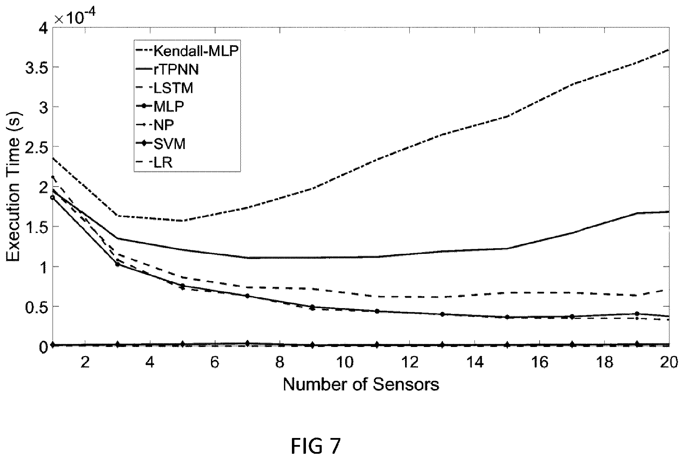

Fig. 7 shows the average execution time that is spent for a single prediction by a multi-sensor fire detector for increasing number of sensors. In this figure, even for 20 sensors, we see that the execution time of the slowest method is less than 40 ms, which is acceptable for the real-time usage of the multi-sensor fire detectors. Moreover, the execution time of rTPNN is between 10ms and 20ms for all number of sensors, and it is comparable with those of the other methods for small number of sensors.

Invention has proposed a novel Recurrent Trend Predictive Neural Network (rTPNN) which captures the trends of time series data via its recurrent internal architecture. rTPNN performs data fusion on the multivariate time series with its captured trend values and significantly improves the prediction performance.

Invention has evaluated the performance of rTPNN for the multi-sensor fire detection on the publicly available dataset, and we presented the comparison of the performance of rTPNN with those of LR, NP, MLP, Kedall-MLP, LSTM, and SVM. We have also demonstrated the performance evaluation via cross-validation in order to evaluate the generalization abilities of these models. According to our results, we have achieved the following conclusions: 1) The rTPNN model outperforms all of the machine learning models in terms of the prediction performance with high generalization ability. 2) rTPNN is the only model among the compared models which is able to achieve very low percentages for both False Negative Rate and False Positive Rate at the same time. 3) rTPNN triggers an alarm within only 11 s from the start of the fire, which is much earlier than the other models.

Moreover, shown that the execution time of the rTPNN model remains under 20ms up to 20 sensors connected to the fire detector. The execution time of rTPNN is comparable with that of the other models for up to 5 sensors while the performance of rTPNN is superior to that of the other models. Thus, the rTPNN model is a successful decision-maker for the real-time implementations of fire detectors due to its great prediction performance and highly acceptable execution time.

The invention is set out in the appended set of claims.

III. REFERENCES

[1] R. Sowah, A. R. Ofoli, S. Krakani, and S. Fiawoo, "Hardware module design of a real-time multi-sensor fire detection and notification system using fuzzy logic," in 2014 IEEE Industry Application Society Annual Meeting. IEEE, 2014, pp. 1-6.

[2] E. O. M. Size, "Share & trends analysis report by application (cleaning & home, medical, food & beverages, spa & relaxation), by product, by sales channel, and segment forecasts, 2019-2025," Report ID, pp. 978-1, 2019.

[3] R. Chagger and D. Smith, "The causes of false fire alarms in buildings," Briefing invention, 2014.

[4] NAKIP MERT ET AL: "Recurrent Trend Predictive Neural Network for Multi-Sensor Fire Detection", IEEE ACCESS, IEEE, USA, vol. 9, 10 June 2021 (2021-06-10), pages 84204-84216, DOI: 10.1109/ACCESS.2021.3087736

[5] M. Nakip and C. Guzelis, "Multi-sensor fire detector based on trend predictive neural network," in Proc. 11th Int. Conf. Electr. Electron. Eng. (ELECO), Nov. 2019, pp. 600-604.

[6] Hyndman R.J. ET AL: "7.2 Trend methods", Forecasting: Principles and Practice (2nd edition) , 1 April 2018 (2018-04-01), https://web.archive.org/web/20190407072957/https:// otexts.com/fpp2/holt.html, Melbourne, Australia

**Claims**

**1.** A method for training and using a recurrent trend predictive neural network, rTPNN, for predicting the probability of fire executed by a multi-sensor fire detector,

• the rTPNN comprising;

- a Sensor Data Processing module, SDP$_i$ , for each sensor i of the I sensors that comprises:

  • a Trend predictor unit, TP$_i$, implementing $t_i^k = \alpha_i^1\left(x_i^k - x_i^{k-1}\right) + \alpha_i^2 t_i^{k-1}$ , where

     ◦ $t_i^k$ and $t_i^{k-1}$ are trends at time k and at time k-1,
     ◦ $\alpha_i^1$ and $\alpha_i^2$ are two learnable parameters,
     ◦ $x_i^k$ and $x_i^{k-1}$ are readings of the sensors i at times k and k-1,

  • a Level Predictor Unit module, LP$_i$ , implementing $l_i^k = \beta_i^1 x_i^k + \beta_i^2 l_i^{k-1}$ , where

     ◦ $l_i^k$ and $l_i^{k-1}$ are predicted levels of sensor I at time k and k-1,
     ◦ $\beta_i^1$ and $\beta_i^2$ are two learnable parameters,

- a fully connected neural network, Fire Predictor, for predicting the probability of presence of fire $y^k$ based on each of $x_i^k$, $t_i^k$ and $l_i^k$, where $y^k$ is in range of [0, 1];

the method comprising steps of:

o training the rTPNN using back-propagation through time using a fire dataset,
o predicting the probability of fire by the trained rTPNN using the readings at times k and k-1 of the sensors of the fire detector.

**Patentansprüche**

1. Verfahren zum Trainieren und Verwenden eines rekurrenten trendprädiktiven neuronalen Netzes, rTPNN, zum Vorhersagen der Wahrscheinlichkeit eines durch einen Multisensor-Brandmelder ausgeführten Brandes,

  • wobei rTPNN umfasst;

- Sensordatenverarbeitungsmodul, SDP$_i$, für jeden Sensor i der I-Sensoren, das Folgendes umfasst:

  • Eine Trendprädiktoreinheit, TP $_i$, implementiert $t_i^k = \alpha_i^1\left(x_i^k - x_i^{k-1}\right) + \alpha_i^2 t_i^{k-1}$ , wobei

     o $t_i^k$ und $t_i^{k-1}$ sind Trends zum Zeitpunkt k und zum Zeitpunkt k-1
     ◦ $\alpha_i^1$ und $\alpha_i^2$ sind zwei erlernbare Parameter,
     o $x_i^k$ und $x_i^{k-1}$ sind Messwerte der Sensoren i zu den Zeitpunkten k und k-1

  • Ein Level-Prädiktor-Einheitsmodul, LP$_i$, implementiert $l_i^k = \beta_i^1 x_i^k + \beta_i^2 l_i^{k-1}$ , wobei

     ◦ $l_i^k$ und $l_i^{k-1}$ sind vorhergesagte Werte des Sensors I zum Zeitpunkt k und k-1,
     ◦ $\beta_i^1$ und $\beta_i^2$ sind zwei erlernbare Parameter,

- Ein vollständig verbundenes neuronales Netzwerk, Brandmelder, zur Vorhersage der Wahrscheinlichkeit des Auftretens eines Feuers auf der $y^k$ Grundlage von jedem von $x_i^k$, $t_i^k$ und $l_i^k$, wobei $y^k$ es sich im Bereich von [0, 1] befindet;

wobei das Verfahren folgende Schritte umfasst:

○ Training des rTPNN mittels Rückwärtspropagierung durch die Zeit unter Verwendung eines Branddatensatzes,
○ Vorhersage der Brandwahrscheinlichkeit durch das trainierte rTPNN unter Verwendung der Messwerte zu den Zeitpunkten k und k-1 der Sensoren des Brandmelders.

**Revendications**

1. Procédé d'entraînement et d'utilisation d'un réseau neuronal prédictif de tendance récurrente, rTPNN, pour prédire la probabilité d'incendie exécuté par un détecteur d'incendie multicapteur,

• le rTPNN comprenant;

■ un module de Traitement des Données de Capteur, SDP$_i$, pour chaque capteur i des I capteurs qui comprend :

• une unité prédicteur de Tendance, TP$_i$, mettant en œuvre $t_i^k = \alpha_i^1\left(x_i^k - x_i^{k-1}\right) + \alpha_i^2 t_i^{k-1}$, où

○ $t_i^k$ et $t_i^{k-1}$ sont les tendances au temps k et au temps k-1,

○ $\alpha_i^1$ et $\alpha_i^2$ sont deux paramètres apprenables,

o $x_i^k$ et $x_i^{k-1}$ sont les lectures des capteurs i aux temps k et k-1,

• un module de l'Unité Prédicteur de Niveau, LP$_i$, mettant en œuvre $l_i^k = \beta_i^1 x_i^k + \beta_i^2 l_i^{k-1}$, où

○ $l_i^k$ et $l_i^{k-1}$ sont les niveaux prédits du capteur I aux temps k et k-1,

○ $\beta_i^1$ et $\beta_i^2$ sont deux paramètres apprenables,

■ un réseau neuronal entièrement connecté, le Prédicteur d'Incendie, pour prédire la probabilité de présence d'un incendie $y^k$ sur la base de chacun des $x_i^k$, $t_i^k$ et $l_i^k$, où $y^k$ est compris entre [0, 1] ;

le procédé comprenant les étapes suivantes :

o entraîner le rTPNN à l'aide de la rétropropagation dans le temps en utilisant un ensemble de données sur les incendies,
o prédire la probabilité d'incendie par le rTPNN entraîné en utilisant les lectures aux temps k et k-1 des capteurs du détecteur d'incendie.

FIG 1

FIG 2

FIG 3

FIG 4

FIG 5

FIG 6

FIG 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- Hardware module design of a real-time multi-sensor fire detection and notification system using fuzzy logic. **R. SOWAH** ; **A. R. OFOLI** ; **S. KRAKANI** ; **S. FIAWOO**. 2014 IEEE Industry Application Society Annual Meeting. IEEE, 2014, 1-6
- **E. O. M. SIZE**. Share & trends analysis report by application (cleaning & home, medical, food & beverages, spa & relaxation), by product, by sales channel, and segment forecasts, 2019-2025. *Report ID*, 2019, 978-1
- **R. CHAGGER** ; **D. SMITH**. The causes of false fire alarms in buildings. *Briefing invention*, 2014
- Recurrent Trend Predictive Neural Network for Multi-Sensor Fire Detection. **NAKIP MERT et al.** IEEE ACCESS. IEEE, 10 June 2021, vol. 9, 84204-84216
- **M. NAKIP** ; **C. GUZELIS**. Multi-sensor fire detector based on trend predictive neural network. *Proc. 11th Int. Conf. Electr. Electron. Eng. (ELECO)*, November 2019, 600-604
- 7.2 Trend methods. **HYNDMAN R.J. et al.** Forecasting: Principles and Practice. 01 April 2018